# EUROPEAN PATENT APPLICATION

(11) **EP 1 294 201 A1**
(43) Date of publication of application: **19.03.2003**
(21) Application number: 01307945.4
(22) Date of filing: 18.09.2001
(51) Int. Cl.: H04Q 7/22

(54) **A method of forwarding text messages, a mobile telecommunications network, a register for a mobile telecommunications network, and a mobile telecommunications terminal**

(71) Applicant: LUCENT TECHNOLOGIES INC., Murray Hill, New Jersey 07974-0636 (US)
(72) Inventor: Packham, Sarah Louise, Chippenham, Wiltshire SN15 3EA (GB); Samuel, Louis Gwyn, Swindon, Wiltshire SN2 3YG (GB)
(74) Representative: Sarup, David Alexander

(57) **Abstract**

A method of sending text messages by forwarding text messages intended for a first terminal to a second terminal is provided. The first terminal is a terminal of a mobile telecommunications network. The method comprises sending a control signal from the first terminal to routing circuitry indicating that text messages intended for the first terminal are to be forwarded to the second terminal. Text messages are then forwarded to the second terminal in consequence.

## Description

### Technical Field

The present invention relates to a method of sending text messages, a mobile telecommunications network, a register for a mobile telecommunications network, and a mobile telecommunications terminal.

### Background of the Invention

Many people either have multiple mobile phones or do not have access to their phones all of the time. Text messaging has become an increasingly popular method of communication and often means that communication is possible without incurring costly call charges.

### Summary of the Invention

The present invention provides a method of sending text messages by forwarding text messages intended for a first terminal to a second terminal, the first terminal being a terminal of a mobile telecommunications network, the method comprising sending a control signal from the first terminal to routing circuitry indicating that text messages intended for the first terminal are to be forwarded to the second terminal, text messages being forwarded to the second terminal in consequence.

The present invention in its preferred embodiments advantageously provides forwarding of text messaging from one mobile phone to another, in particular where a function in the menu of the mobile handset is provided to allow the user to forward text messaging to another mobile handset and/or to a computer. It allows the sender of the text message to just send one message and be sure that the reader will receive it.

Preferably the first terminal is a mobile phone and the second terminal is another mobile phone. In particular it allows people that have two phones both to forward text messages intended for them in addition to voice calls.

Alternatively, preferably the first terminal is a mobile phone and the second terminal is a computer. Being able to send the message to a computer means that people would be able to turn their mobile phones off in areas where it is necessary (testing environments for example, or hospitals) and still be able to have access to their messages. It also allows people to read their received text messages via email, for example on a home computer, which would possibly cause less disruption to their working day.

Furthermore, preferably the computer is a home computer or personal computer.

Furthermore, preferably the control signal includes an identifier of the second terminal.

Furthermore, preferably the mobile telecommunications network is a Universal Mobile Telecommunications System UMTS network

Preferably text message forwarding is disabled by a further control signal being sent indicating that text message forwarding is no longer desired. Text message forwarding is thus selectably enabled and disabled by the user of the first terminal.

Preferably the routing circuitry comprises a mobile switching centre which interrogates a register for routing information to the first terminal, the register recognising the message as a text message and in response thereto instead providing routing information to direct the text message to the second terminal. Preferably the register is a home location register.

The present invention also provides a mobile telecommunications network comprising a first terminal, and routing circuitry for forwarding text messages intended for the first terminal to a second terminal, the routing circuitry being responsive to a control signal from the first terminal indicating that text message forwarding to the second terminal is to be enabled.

Preferably the routing circuitry comprises a mobile switching centre which interrogates a register for routing information to the first terminal, the register recognising the message as a text message and in response thereto instead providing routing information to direct the text message to the second terminal.

The present invention also provides a register for a mobile telecommunications network operative upon being interrogated to provide routing information to a first terminal for a text message to provide routing information to a second terminal. Preferably the register is a home location register.

The present invention also provides a mobile telecommunications terminal having a function in its menu to enable text message forwarding to another telecommunications terminal by sending a text message forwarding control signal. Preferably the mobile telecommunications terminal is a mobile phone.

### Brief Description of the Drawings

A preferred embodiment of the present invention will now be described by way of example and with reference to the drawings, in which:

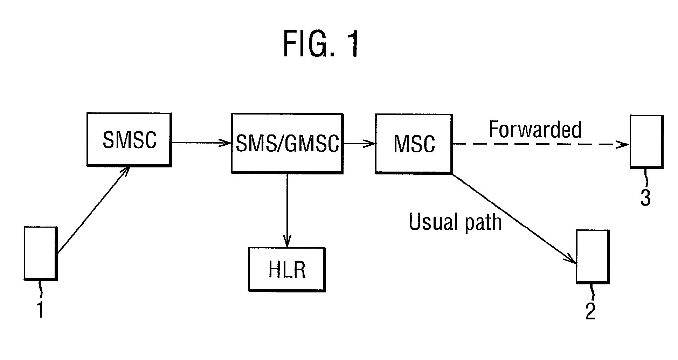

Figure 1 is a diagrammatic illustration of a UMTS network.

### Detailed Description

As shown in Figure 1, in a Universal Mobile Telecommunications System UMTS network, a short message service centre SMSC forwards a text message from a first user terminal 1 to a short message service Gateway mobile switching centre SMS/GMSC. The SMS/GMSC interrogates a home location register HLR for information such as location of the destination user terminal 2 and routing information thereto. By adding a function to the HLR, which identifies a text message and is capable of understanding forwarding information so as to give updated (i.e. rerouted) routing information the text message would then be sent via the mobile switching centre MSC to the correct user terminal 3, which in this example is a mobile handset. Thus the usual path of the text message to the user terminal 2 is replaced by the path of the text message to the user terminal 3, using the routing information provided by the HLR.

Forwarding of text messaging from one mobile phone to another is thus provided. A function in the menu of the mobile handset is provided to allow the user to have text messages forwarded to another mobile handset and/or to a computer.

Where the user terminal 3 is a mobile handset, text message forwarding allows people that have two phones to receive all their text messages on one, which saves people with two handsets needing to carry them both about.

Where the user terminal 3 is a computer, being able to send a text message to a computer means that the user would be able to turn their mobile phone(s) off in areas where that is necessary (such as in testing environments or hospitals) and still be able to have access to their messages. It also allows people to read their text messages received via email, for example on a home computer, which would possibly cause less disruption to their working day.

## Claims

1. A method of sending text messages by forwarding text messages intended for a first terminal to a second terminal, the first terminal being a terminal of a mobile telecommunications network, the method comprising sending a control signal from the first terminal to routing circuitry indicating that text messages intended for the first terminal are to be forwarded to the second terminal, text messages being forwarded to the second terminal in consequence.

2. A method of forwarding text messages intended for a first terminal to a second terminal according to claim 1, in which the first terminal is a mobile phone and the second terminal is another mobile phone.

3. A method of forwarding text messages intended for a first terminal to a second terminal according to claim 1, in which the first terminal is a mobile phone and the second terminal is a computer.

4. A method of forwarding text messages intended for a first terminal to a second terminal according to any preceding claim, in which text message forwarding is disabled by a further control signal being sent indicating that text message forwarding is no longer desired.

5. A method of forwarding text messages intended for a first terminal to a second terminal according to any preceding claim, in which the routing circuitry comprises a mobile switching centre which interrogates a register for routing information to the first terminal, the register recognising the message as a text message and in response thereto instead providing routing information to direct the text message to the second terminal.

6. A method of forwarding text messages intended for a first terminal to a second terminal according to claim 5, in which the register is a home location register.

7. A mobile telecommunications network comprising a first terminal, and routing circuitry for forwarding text messages intended for the first terminal to a second terminal, the routing circuitry being responsive to a control signal from the first terminal indicating that text message forwarding to the second terminal is to be enabled.

8. A mobile telecommunications network according to claim 7, in which the routing circuitry comprises a mobile switching centre which interrogates a register for routing information to the first terminal, the register recognising the message as a text message and in response thereto instead providing routing information to direct the text message to the second terminal.

9. A register for a mobile telecommunications network operative upon being interrogated to provide routing information to a first terminal for a text message to provide routing information to a second terminal.

10. A mobile telecommunications terminal having a function in its menu to enable text message forwarding to another telecommunications terminal by sending a text message forwarding control signal.
